# EUROPEAN PATENT SPECIFICATION

(11) **EP 1 144 228 B1**
(45) Date of publication and mention of the grant of the patent: **13.08.2003**
(21) Application number: 00900688.3
(22) Date of filing: 18.01.2000
(51) Int. Cl.: B60R 22/40

(54) **RETRACTOR**
RETRAKTOR
ENROULEUR AUTOMATIQUE

(30) Priority: 22.01.1999 GB 9901507; 23.12.1999 GB 9930508
(43) Date of publication of application: 17.10.2001
(60) Divisional application: 02015484.5
(73) Proprietor: BREED AUTOMOTIVE TECHNOLOGY, INC., Lakeland, FL 33807-3050 (US)
(72) Inventor: BLACKADDER, David, Carlisle, Cumbria CA4 8OG (GB); SMITHSON, Alan, George, Wetheral, Cumbria CA4 8HD (GB); TAYLOR, John, Penrith, Cumbria CA11 9LW (GB); HARTE, Joseph, Patrick, Maryport, Cumbria CA15 6RP (GB); MITCHINSON, Nigel, Carlisle, Cumbria CA5 7LS (GB); BOWMAN, Paul, Carlisle, Cumbria CA4 8OF (GB)
(74) Representative: Freeman, Jacqueline Carol
(86) International application number: GB0000110
(87) International publication number: WO00043244

(56) References cited:
- DE-U- 29 720 817
- DE-U- 29 720 818
- US-A- 3 343 763
- PATENT ABSTRACTS OF JAPAN vol. 017, no. 414 (M-1456), 3 August 1993 (1993-08-03) & JP 05 085304 A (MAZDA MOTOR CORP), 6 April 1993 (1993-04-06)

## Description

This application is related to divisional application 02015484.5

The present invention relates to a retractor for a vehicle safety restraint and particularly to a retractor for use in a rear seat.

Retractors for rear seat belts are often mounted on the seat back rest itself since space is at a premium in the rear passenger compartment. For the seat belt to be effective the back rest must be fastened securely to a fixed part of the vehicle which would be the case in normal use. However in some vehicles, such as so-called station-wagons or estate cars and so-called hatchback cars, the rear seat back rest can be unlatched from its fastened upright position and rotated into a horizontal position to increase the luggage capacity of the vehicle. In some models the back rest is split and one part may remain upright to accommodate a seated passenger while the other part is lowered to allow bulky luggage to overflow from the luggage compartment behind the seat back.

In both cases there is a danger that when the seat back rest is returned to the upright position it may not be securely locked. In a crash, the rear passenger will then not be safely restrained because the retractor, attached to the seat back, will move when the seat back moves under the inertial loading caused by the crash.

The rear seat retractor is constructed in a similar manner to a front seat retractor and has both a web sensor and a vehicle sensor. The web sensor locks the retractor against pay-out if the belt webbing is suddenly jerked, as would happen if it were suddenly loaded by the inertia of the user in a crash. This is known technology. The vehicle sensor detects a sudden change of speed of the vehicle and locks the retractor, again in a manner known to those skilled in the art.

The vehicle sensor typically comprises an inertia sensitive ball resting freely in a cup. A sudden deceleration of the vehicle causes the ball to keep moving and to ride up the side of the cup. A pawl resting on the ball is thus deflected upwards and this pawl activates a locking mechanism to lock the retractor spool against rotation and thus against further pay-out of webbing.

The geometry of the ball type vehicle sensor means that it will also be activated if the retractor is tilted. This is used in the known systems described in DE 29 27 159 and GB 2 249 339 as an inherent seat back tilt sensor. If the seat back is not upright then the vehicle sensor locks the retractor against pay-out and it cannot be used.

However this known arrangement will not detect a rear seat back which is in the upright position but is not locked securely into the upright position. In this situation the retractor of the known arrangements could be used to fasten a vehicle occupant who will be unaware that the retractor is free to move and thus that he is not safely restrained.

In the system described in GB 2 286 624, a sensor is located in the seat back latch itself. When this detects that the latch is securely fastened it releases an additional locking device on the retractor to allow the retractor to be used. This is an expensive system requiring an additional locking device to be fitted to the retractor.

In addition DE 297 20818 U and US 3 343 763 show prior art systems.

DE 297 20 818 U discloses a retractor according to the preamble of claim 1.

The present invention aims to provide an improved safety locking arrangement for a retractor in a rear seat.

A retractor for a vehicle safety restraint for use in a rear vehicle seat, the retractor comprising: a rotatable spool, for storing seat belt webbing, a retractor locking mechanism, for locking the spool against rotation, means connecting a seat latch: to the locking mechanism, an override lockout lever, a resilient biasing means, arranged to bias the lockout lever into an engaging position in which the retractor locking mechanism is engaged, wherein the means is arranged, under the influence of the seat latch, to move the lever between the engaging position in which the locking mechanism engages, and an unengaged position in which the lever is held clear of the locking mechanism, and the locking mechanism is disengaged, wherein the locking mechanism comprises a vehicle sensor having an inertia sensitive ball resting freely in a cup and wherein the override lever is biased to activate the vehicle sensor by moving the ball to a position in which it causes the pawl to engage a ratchet wheel to lock the spool against payout of the seat belt webbing.

According to the invention the locking mechanism comprises a vehicle sensor having an inertia sensitive ball resting freely in a cup. The override lockout lever may be arranged to act on the vehicle sensor so that in its engaging position it is biased to move the ball to a position in which the vehicle sensor is activated and the retractor is locked against payout of the seat belt webbing. In the unengaged position, the lever is held clear of the ball so that the retractor is unlocked and the webbing is free to pay out.

According to a preferred embodiment the locking mechanism is moved in phase with the locking member, so as to maintain its control of the angular position of the locking member.

Preferably the connecting means comprises a cable, for example a Bowden cable which has one end connected to the seat latch, and the other end connected to a spring biased slider acting on the retractor. When the seat is securely latched the Bowden cable is pulled away from the retractor locking mechanism and thus pulls the slider away from the locking mechanism. When the seat is not securely latched then the Bowden cable remains in the extended state and the slider, under the spring influence, engages and activates the locking mechanism, thus locking the retractor against webbing payout.

In a traditional retractor, the retractor locking mechanism, e.g. the vehicle sensor and retractor locking pawl, is mounted in a so-called lockcup otherwise known as a multi-function piece which is attached to the side of the spool.

Preferably the override lockout components, i.e. the lever, the resilient biasing means and the part of the connecting means (e.g. the cable) which is arranged to act on the lockout lever, are mounted in the mechanism bush so that they do not rotate around the spool when the retractor locks. The override lockout components are housed in a recess in a raised housing structure formed on the mechanism bush. The structure surrounds an aperture in the bush through which the lever can pivot to engage the retractor locking means to lock the spool. The override lockout components can thus all be assembled from one side of the assembly. They can thus be installed at any stage of the assembly process and can be tested and checked as a module before the mechanism bush is assembled to the retractor, i.e. attached to the frame.

A retractor according to the present invention has advantages over known override lockout systems because there are less parts, leading to cost savings and improved reliability. Also the main locking mechanism is maintained in the correct orientation with respect to the lockbar, inhibiting self engagement of the lockbar in normal use, and thus again improving reliability and also contributing to comfort and reducing noise.

For a better understanding of the present invention, and to show how the same may be carried into effect, reference will now be made to the accompanying drawings, in which:
Figure 1 shows a retractor in cross sectional view and illustrates a first embodiment of the invention;
Figure 2 shows a retractor in cross sectional view and illustrates a second embodiment of the invention;

Throughout the Figures like reference numerals denote like parts.

A vehicle safety retractor is shown generally at 1 and comprises a rotatable spool 2 with seat belt webbing 3 wound thereon. The spool 2 is rotatable about its longitudinal axis in bushings 4 in sides 5 of a retractor frame 6. On the left hand side (as illustrated) of the frame 6 is fixed a toothed ratchet wheel 7, and a web sensor disc. The web sensor disc is arranged to activate locking of the retractor when the webbing is pulled out suddenly as for example in a vehicle crash. This operates in known manner.

Below this, as shown, is located a vehicle sensor 9, the function of which is to activate locking of the retractor under conditions of sudden acceleration or deceleration of the vehicle, again indicative of a crash and again well known in the art. The vehicle sensor 9 comprises an inertia sensitive ball 10 resting freely in a hollow cup 11. A pivoted hat 12 rests on the ball 10, and is coupled to a locking pawl 13 arranged for engagement, in the locking position, with the ratchet wheel 7 to lock the spool 2 against further webbing payout. When sudden acceleration of the vehicle occurs then the ball 10 is displaced and rolls up a side of the cup 11. This movement lifts the hat 12 and moves the pawl 13 into locking engagement with the ratchet wheel 7.

An additional locking lever 14 is located adjacent the ball 10. It is biased by a spring 15 to the upward position in which it displaces the ball 10 into the retractor locking position. The locking lever 14 is connected to one end of a Bowden cable 16. The other end (not shown) of the Bowden cable 16 is connected to a seat latching mechanism, for example a rear seat latching mechanism (not shown). When the seat is securely latched the Bowden cable 16 is retracted away from the vehicle sensor and pulls the locking lever 14 away from the ball 10. Thus the spool is free to rotate and the retractor operates normally.

However, if the seat is not securely latched then the Bowden cable, under the influence of the spring 15 acting through the lever 14, remains in an extended state, and the lever 14 contacts the ball 10 and displaces it to the position in which the spool becomes locked against further webbing payout.

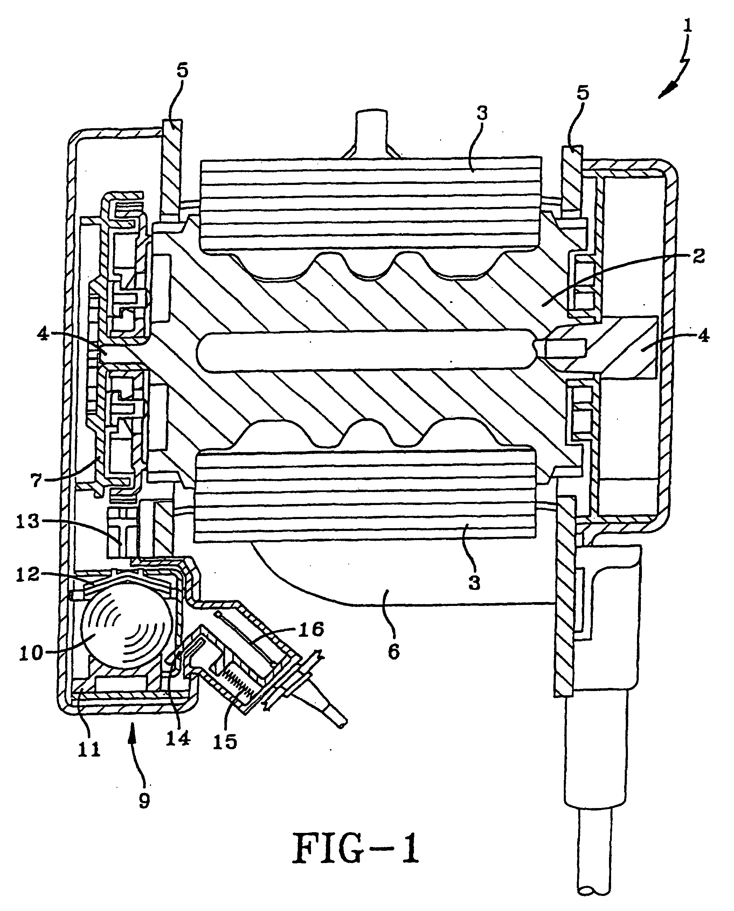

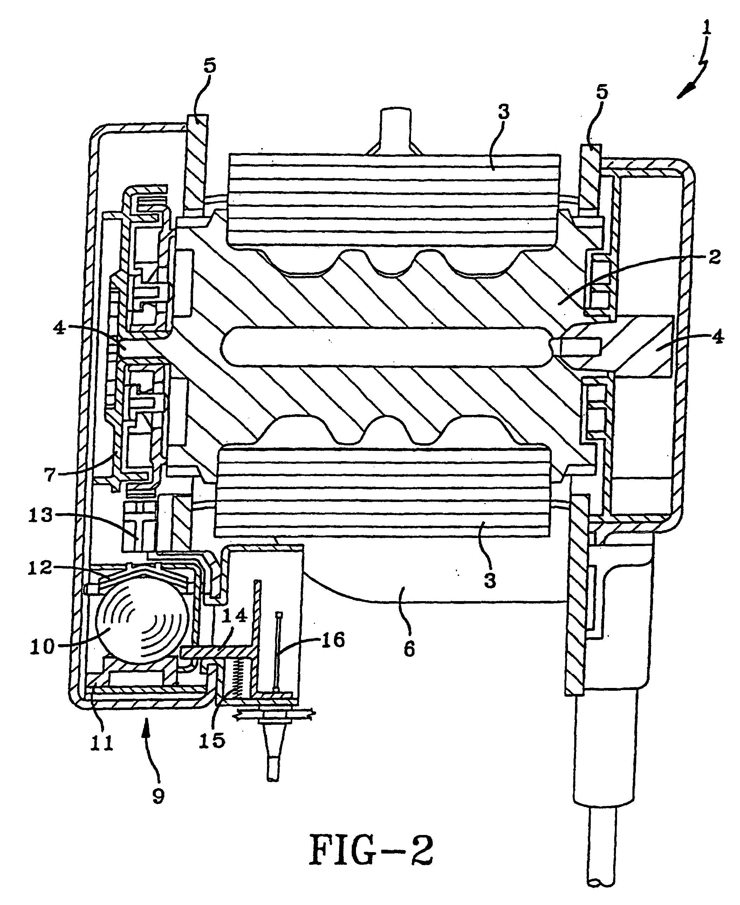

In Figure 1 the line of action of the locking lever 14 is oriented obliquely to the vehicle sensor, and in Figure 2 it is oriented generally in a vertical plane. Otherwise Figures 1 and 2 show identical parts.

## Claims

1. A retractor for a vehicle safety restraint for use in a rear vehicle seat, the retractor comprising:
a rotatable spool (2), for storing seat belt webbing, a retractor locking mechanism, for locking the spool (2) against rotation,
means (16) connecting a seat latch to the locking mechanism, an override lockout lever (14),
a resilient biasing means (15), arranged to bias the lockout lever (14) into an engaging position in which the retractor locking mechanism is engaged,
wherein the connecting means (16) is arranged, under the influence of the seat latch, to move the lever (14) between the engaging position in which the locking mechanism engages, and an unengaged position in which the lever (14) is held clear of the locking mechanism, and the locking mechanism is disengaged,
wherein the locking mechanism comprises a vehicle sensor (9) having an inertia sensitive ball (10) resting freely in a cup (11) and **characterised in that**
the override lever is biased to activate the vehicle sensor (9) by moving the ball to a position in which it causes a pawl (13) to engage a ratchet wheel (7) to lock the spool (2) against pay out of the seat belt webbing.

2. A retractor according to claim 1 wherein the override lockout lever (14) is arranged so that in its unengaged position it is held clear of the ball (10) so that the retractor is unlocked and the webbing is free to pay out.

3. A retractor according to any one of the preceding claims wherein the locking mechanism is moved in phase with the lockout lever (14), so as to maintain its control of the angular position of the lockout lever (14).

4. A retractor according to any one of the preceding claims wherein the connecting means comprises cable (16) which has one end connected to the seat latch and the other end connected to a spring biased slider acting on the lockout lever (14).

## Patentansprüche

1. Aufrollvorrichtung für eine Fahrzeugsicherheitsrückhaltevorrichtung zur Verwendung bei einem Fahrzeugrücksitz, wobei die Aufrollvorrichtung folgendes umfaßt:
eine drehbare Spule (2) zum Aufbewahren von Sicherheitsgurtband,
einen Aufrollvorrichtungsarretiermechanismus zum Arretieren der Spule (2) gegen eine Drehung,
Mittel (16), die eine Sitzklinke mit dem Arretiermechanismus verbinden,
einen Überlagerungssperrhebel (14),
ein elastisches Vorspannmittel (15), angeordnet, um den Sperrhebel (14) in eine Eingriffsposition vorzuspannen, in welcher der Aufrollvorrichtungsarretiermechanismus in Eingriff ist,
bei der das Verbindungsmittel (16) angeordnet wird, um unter dem Einfluß der Sitzklinke den Hebel (14) zu bewegen, zwischen der Eingriffsposition, in welcher der Arretiermechanismus eingreift, und einer ausgerückten Position, in welcher der Hebel (14) fern vom Arretiermechanismus gehalten wird und der Arretiermechanismus außer Eingriff ist,
bei welcher der Arretiermechanismus einen Fahrzeugsensor (9) mit einer trägheitsempfindlichen Kugel (10) umfaßt, die frei einer Pfanne (11) ruht, und **dadurch gekennzeichnet, daß**
der Überlagerungshebel vorgespannt wird, um den Fahrzeugsensor (9) durch ein Bewegen der Kugel in eine Position zu aktivieren, in der sie bewirkt, daß eine Sperrklinke (13) mit einem Sperrklinkenrad (7) ineinandergreift, um die Spule (2) gegen ein Ausgeben des Sicherheitsgurtbands zu arretieren.

2. Aufrollvorrichtung nach Anspruch 1, bei welcher der Überlagerungssperrhebel (14) so angeordnet wird, daß er in seiner ausgerückten Position fern von der Kugel (10) gehalten wird, so daß die Aufrollvorrichtung entarretiert ist und das Gurtband frei zum Ausgeben ist.

3. Aufrollvorrichtung nach einem der vorhergehenden Ansprüche, bei welcher der Arretiermechanismus phasengleich mit dem Sperrhebel (14) bewegt wird, um so seine Kontrolle der Winkelposition des Sperrhebels (14) aufrechtzuerhalten.

4. Aufrollvorrichtung nach einem der vorhergehenden Ansprüche, bei der das Verbindungsmittel ein Seil (16) umfaßt, dessen eines Ende mit der Sitzklinke verbunden wird und dessen anderes Ende mit einem federvorgespannten Schieber verbunden wird, der auf den Sperrhebel (14) wirkt.

## Revendications

1. Enrouleur d'un élément de retenue de sécurité d'un véhicule destiné à être utilisé dans un siège arrière du véhicule, l'enrouleur comprenant:
une bobine rotative (2) destinée à stocker la sangle de la ceinture de sécurité,
un mécanisme de verrouillage de l'enrouleur pour bloquer la bobine (2) contre la rotation,
un moyen (16) connectant un verrou du siège au mécanisme de verrouillage, et
un levier de verrouillage prioritaire (14),
un moyen poussoir élastique (15), destiné à pousser le levier de verrouillage (14) dans une position d'engagement, dans laquelle le mécanisme de verrouillage de l'enrouleur est engagé,
le moyen de connexion (16) étant destiné à déplacer, sous l'influence du verrou du siège, le levier (14) entre la position d'engagement, dans laquelle le mécanisme de verrouillage est engagé, et une position non engagée, dans laquelle le levier (14) reste dégagé du mécanisme de verrouillage, le mécanisme de verrouillage étant dégagé;
le mécanisme de verrouillage comprenant un capteur du véhicule (9) comportant une bille sensible à l'inertie (10) reposant librement dans une coupelle (11), **caractérisé en ce que**
le levier prioritaire est poussé à actionner le capteur du véhicule (9) par déplacement de la bille vers une position dans laquelle elle entraîne l'engagement d'un cliquet (13) dans une roue à rochet (7) pour bloquer la bobine (2) contre un déroulement de la sangle de la ceinture de sécurité.

2. Enrouleur selon la revendication 1, dans lequel le levier de verrouillage prioritaire (14) est conçu de sorte que dans sa position dégagée, il reste dégagé de la bille (10), l'enrouleur étant ainsi déverrouillé et la sangle pouvant être déroulée librement.

3. Enrouleur selon l'une quelconque des revendications précédentes, dans lequel le mécanisme de verrouillage est déplacé en phase avec le levier de verrouillage (14), de sorte à maintenir le contrôle de la position angulaire du levier de verrouillage (14).

4. Enrouleur selon l'une quelconque des revendications précédentes, dans lequel le moyen de connexion comprend un câble (16) comportant une extrémité connectée au verrou du siège, l'autre extrémité étant connectée à un coulisseau sollicité par ressort agissant sur le levier de verrouillage (14).
